# EUROPEAN PATENT SPECIFICATION

(11) **EP 0 930 559 B1**
(45) Date of publication and mention of the grant of the patent: **20.08.2003**
(21) Application number: 99100504.2
(22) Date of filing: 12.01.1999
(51) Int. Cl.: G06F 3/023

(54) **Character entry method and device**
Verfahren und Gerät zur Zeicheneingabe
Procédé et dispositif pour l'entrée de caractères

(30) Priority: 14.01.1998 JP 1800498
(43) Date of publication of application: 21.07.1999
(73) Proprietor: SEIKO EPSON CORPORATION, Shinjuku-ku, Tokyo 163-0811 (JP)
(72) Inventor: Kurashina, Hiroyasu c/o Seiko Epson Corporation, Suwa-shi, Nagano-ken 392-8502 (JP)
(74) Representative: Hoffmann, Eckart, Dipl.-Ing.

(56) References cited:
- EP-A- 0 588 538
- EP-A- 0 660 216
- US-A- 5 623 682
- PATENT ABSTRACTS OF JAPAN vol. 011, no. 313 (P-626), 13 October 1987 & JP 62 105265 A (NEC CORP), 15 May 1987
- PATENT ABSTRACTS OF JAPAN vol. 012, no. 161 (P-702), 17 May 1988 & JP 62 274360 A (NEC CORP), 28 November 1987

## Description

### BACKGROUND OF THE INVENTION

### Field of the Invention

This invention relates to a character entry method for entering characters or letters of a plurality of languages, and a device therefor.

### Prior Art

Conventionally, when a single keyboard is used to enter alphabetic letters of a plurality of languages (e.g. English, German, French, etc.), each key of the keyboard is assigned to a plurality of letters of alphabets of respective different languages, and after selecting a desired language mode by a language entry mode selection key or the like, letters of a desired language are entered.

Further, for instance, when a keyboard for the English language is used, the English alphabet is set as a standard one, while alphabets of other languages (e.g. German) are set as nonstandard ones. in this case, a symbol selection screen is opened just as in the case of entering a symbol, and a desired nonstandard alphabetic letter is selected out of candidate letters displayed on the symbol selection screen and then entered.

However, in the conventional method in which switching between the functions of each key is carried out e.g. by the language entry mode selection key, etc., it is required to consider the arrangement or layout of the respective keys on the keyboard assigned to letters of different languages. Further, it is impossible to have letters of the different languages printed on each of the small keys for indication, and troublesome to switch between functions of each key.

On the other hand, the method of selecting a desired letter from a list of letters for entry as conventionally carried out in entering a symbol requires troublesome operations by using a cursor key or the like to find out the desired letter and hence takes time and labor.

If the letters for selection are classified into a hierarchically subdivided groups (menus), the number of letters in each group is decreased. In this case, however, the depth of groups is increased, making the selecting operation troublesome.

US-A-5,623,682 discloses an apparatus for processing document information that includes a keyboard, for inputting characters of a plurality of languages, symbols (accents) relating to the pronunciation of the inputted characters, a selection key, a key for inputting a nationality code, and a display for displaying proposed accents relating to the pronunciation of the inputted characters. To enter a character with an accent according to this prior art, the corresponding character key is operated along with a predetermined key on the keyboard. In response to this, if there is more than one accent for the particular character, proposed accents are displayed for selection. Selection is made by means of a cursor key and a selection key. Once the selection has been made the accented character is entered as input data. Plural accents may be displayed in a priority order chosen in response to selections made before.

EP-A-0 930 559 discloses a character entry method that allows a user to input a character that cannot be generated by a keyboard (target character) by first typing a key on the keyboard to input a character related to the target character, then repeatedly invoking a replace function to replace the typed character with each character in turn of a group of characters related to the typed character until the desired character is selected. For example, to input the character "á", the user inputs "a" by typing the "a" key on the keyboard, then selects the "á" by repeatedly invoking a replace function to replace the "a" with characters related to the "a" until the replace function replaces the "a" with "á". The method automatically reorders the groups to present related characters in decreasing order of their anticipated likelihood of selection after a selection is made so that the next time the replace function is invoked, the new order is used. A user may also reorder the groups, change the characters included in each group, add groups, and delete groups.

### SUMMARY OF THE INVENTION

It is a first object of the invention to provide a character entry method which makes it possible to enter nonstandard alphabetic letters easily and quickly by converting entered standard alphabetic letters to nonstandard ones.

It is a second object of the invention to provide a character entry device which makes it possible to enter nonstandard alphabetic letters easily and quickly by converting entered standard alphabetic letters to the nonstandard one.

These objects are achieved with a method as claimed in claim 1 and a device as claimed in claim 6, respectively. Preferred embodiments of the invention are subject-matter of the dependent claims.

According to the invention, a plurality of standard alphabetic letters can be collectively converted to a nonstandard alphabetic letter. Therefore, it is possible to more efficiently convert the entered alphabetic letters to the nonstandard alphabetic letter and hence the operability is increased. nji letter.

The above and other objects, features, and advantages of the invention will become more apparent from the following detailed description taken in conjunction with the accompanying drawings.

### BRIEF DESCRIPTION OF THE DRAWINGS

- FIG. 1: is a perspective view of an appearance of a tape printing apparatus incorporating a character entry device according to an embodiment of the invention;
- FIG. 2: is a perspective view showing the FIG. 1 tape printing apparatus with its lid open, together with a tape cartridge to be loaded therein;
- FIG. 3: is a block diagram schematically showing a configuration of a control system of the FIG. 1 tape printing apparatus;
- FIG. 4: is a flowchart showing an overall control process executed by the FIG. 1 tape printing apparatus;
- FIGS. 5A and 5B: are diagrams which are useful in explaining a display screen of a liquid crystal display;
- FIG. 6: is a diagram showing an example of a sequence of screens displayed on the display screen, which is useful in explaining a method of converting a standard alphabetic letter to a nonstandard one;
- FIG. 7: is a diagram showing a table of nonstandard alphabetic letters, for selection;
- FIG. 8A: is a diagram showing a table of principal diacritical marks;
- FIG. 8B: is a diagram showing a table of principal special marks;
- FIG. 9: is a block diagram schematically showing a keyboard of a control system of a tape printing apparatus incorporating a variation of the character entry device having a capability of entering the Japanese language;
- FIG. 10: is a flowchart showing an overall control process executed by the tape printing apparatus incorporating the variation of the character entry device; and
- FIG. 11: is a diagram showing an example of a sequence of screens displayed on the display screen, which is useful in explaining operations for an entry mode selection executed by the tape printing apparatus incorporating the variation of the character entry device.

### DETAILED DESCRIPTION

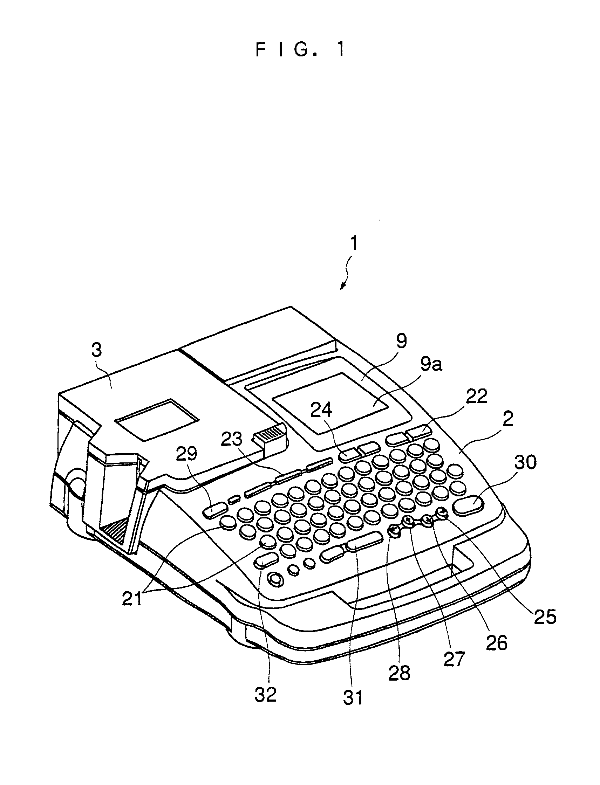

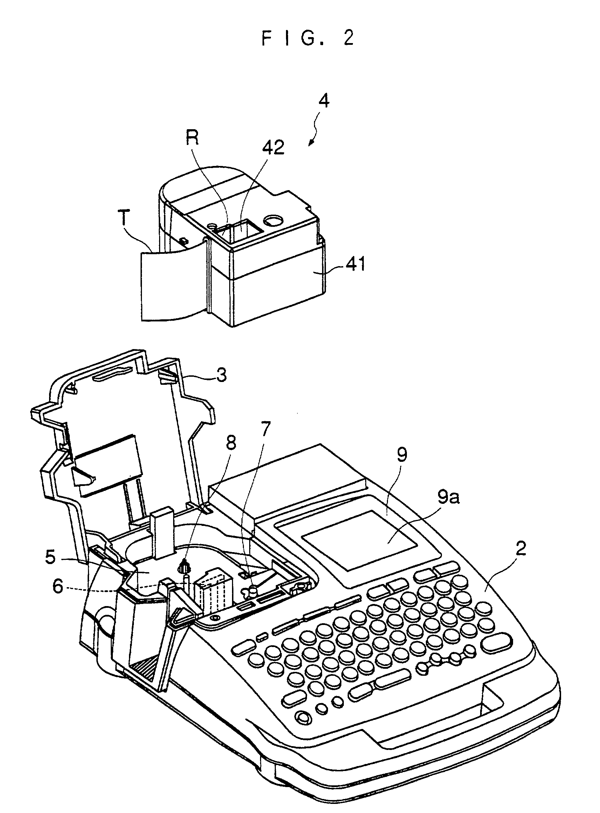

Referring first to FIGS. 1 and 2, there is shown the whole arrangement of a tape printing apparatus incorporating a character entry device according to an embodiment of the invention. As shown in the figures, the tape printing apparatus 1 includes a keyboard 2 arranged on a front-side portion of a top thereof, a liquid crystal display 9 arranged in a right-side rear portion of the same, and a lid 3 mounted on a left-side rear portion of the same. The liquid crystal display 9 has a display screen 9a which is capable of displaying four lines each formed by a line number and twelve characters at the maximum, in a mode of normal text display.

Arranged on the keyboard 2 are a character key group 21 including alphabet keys and symbol keys, and a function key group for designating various operational modes. The function key group includes a cancel key 22 for cancellation of processing designated by another function key, four cursor-moving keys 25, 26, 27 and 28 for moving a cursor in respective rightward (→), downward (↓), upward (↑), and leftward (←) directions, a print key 29, a selection key 30 for selecting modes and feeding lines during text entry, a conversion key 31 for converting a character to a similar one of other languages, a shift key 32, and so forth.

As shown in FIG. 2, arranged under the lid 3 is a cartridge compartment 5 for loading a tape cartridge 4 therein. The tape cartridge 4 contains a roll of a tape (recording medium) T having a fixed width. The tape T is fed from the tape cartridge 4 for printing. The tape cartridge 4 has a reverse or back side wall thereof perforated with a plurality of small holes for enabling discrimination between types of tapes T which are different in width, etc., while the cartridge compartment 5 is provided with microswitches, not shown, for detecting a specific combination of holes each type of tape cartridge has. This enables the tape printing apparatus I to identify the kind of tape T contained in the tape cartridge.

The tape T has an adhesive surface on the reverse side which is covered with a peel-off paper. The tape cartridge 4 contains a roll of ink ribbon R together with the roll of tape T. The tape T and the ink ribbon R are fed or run such that they pass by an internal window 42 formed in a casing 41 of the tape cartridge 4 in a state lying one upon the other. The tape T alone is delivered out of the apparatus, but the ink ribbon R is taken up into a roll within the tape cartridge 4.

A thermal head 6 is arranged in the cartridge compartment 5. When the tape cartridge 4 is loaded in the cartridge compartment 5 and the lid 3 is closed, the thermal head 6 advances toward a platen roller, not shown, arranged in the tape cartridge 4 to support a double-ply of the tape T and the ink ribbon R exposed from the window 42 of the tape cartridge 4 to the outside by sandwiching them between the platen roller and the thermal head 6 itself. In response to print commands, the platen roller rotates and the thermal head 6 is driven to be heated, whereby desired letters and symbols are printed on the surface of the tape T by the ink ribbon R.

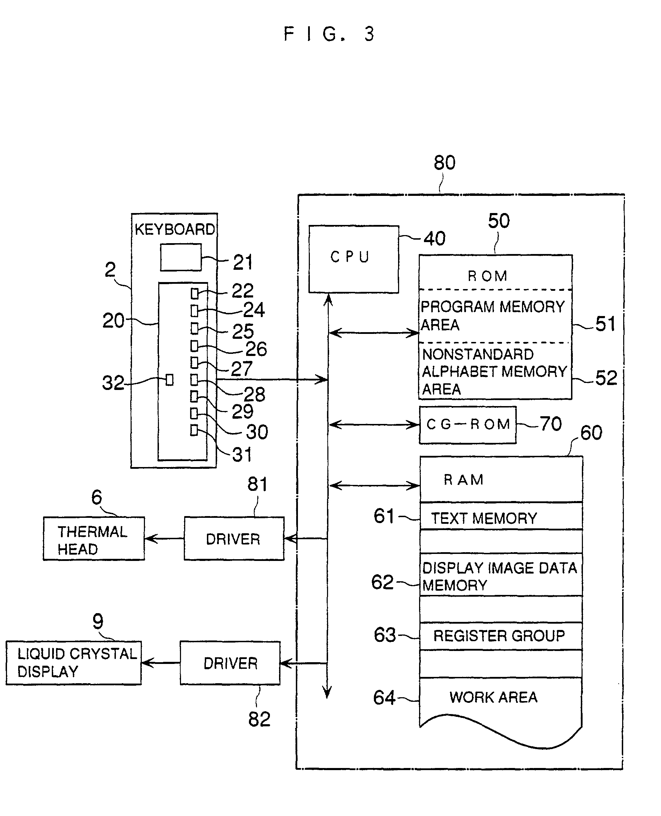

Referring next to FIG. 3, a control system of the tape printing apparatus 1 will be described. The control system includes a control circuit 80 comprised of a CPU 40, a ROM 50, a RAM 60, and a character generator ROM (hereinafter referred to as "CG-ROM") 70. The control circuit 80 has its input port connected to the keyboard 2, and its output ports connected to the thermal head 6 via a driver 81 for driving the same and the liquid crystal display 9 via a driver 82 for driving the same for display operation.

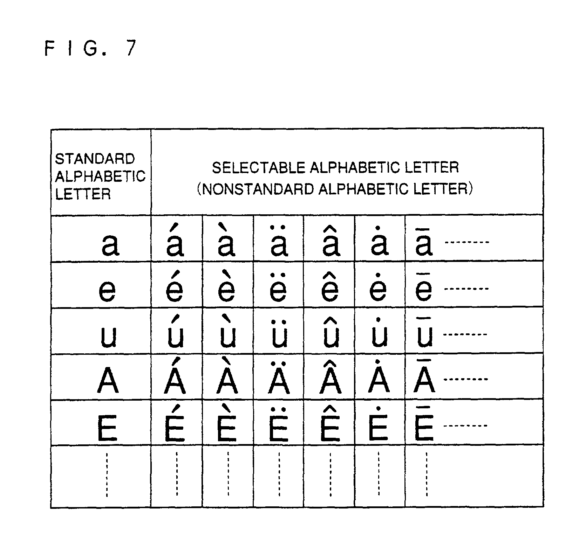

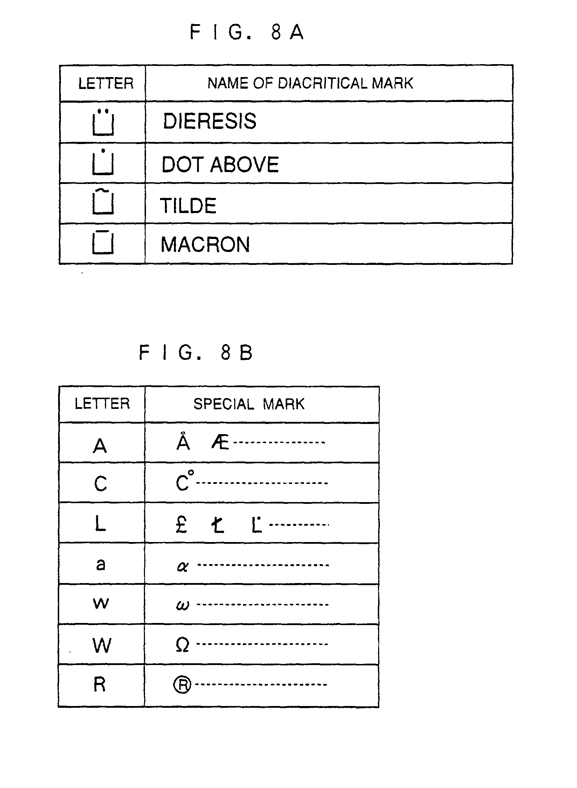

The ROM 50 has a program memory area 51 storing control programs for controlling the thermal head 6 and the liquid crystal display 9, and various programs for processing operations, described hereinafter. Further, the ROM 50 has a nonstandard alphabet memory area 52 storing code data of nonstandard alphabetic letters (see FIGS. 7, 8A and 8B), referred to hereinafter.

The RAM 60 includes a text memory 61 for temporarily storing text data of letters and symbols entered via the keyboard 2, a display image data memory 62 for storing image data corresponding to contents displayed on the display screen 9a of the liquid crystal display 9, a register group 63 for temporarily storing results of processing by the CPU 40, a work area 64 for forming image data and the like in various kinds of processes described hereinafter, and so forth. The CG-ROM 70 stores font data of letters and symbols provided for the tape printing apparatus 1, and outputs corresponding font data when code data specifying a character is given thereto.

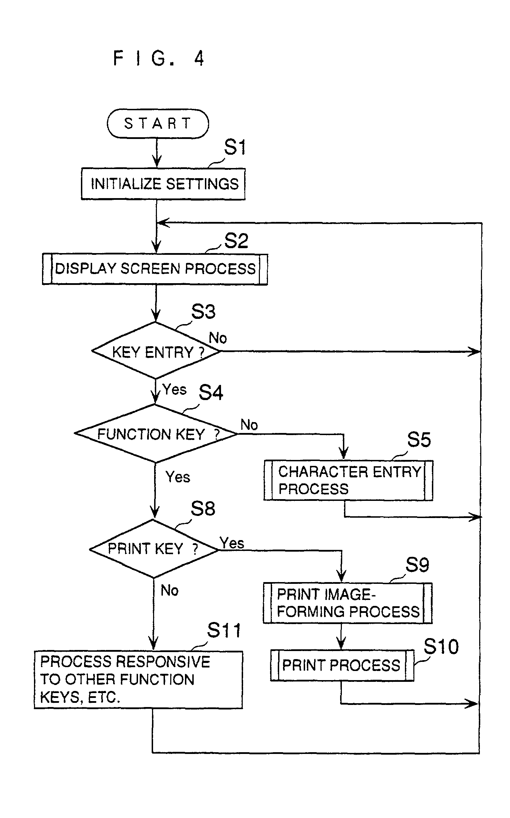

Next, the overall control process carried out by the tape printing apparatus 1 will be described with reference to FIG. 4 et. seq. Processes for basic operations of moving the cursor by the cursor key 25, etc., and other operations responsive to input via the function keys, which are not directly related to the present invention, will be collectively shown as "PROCESS RESPONSIVE TO OTHER FUNCTION KEYS, ETC." (S11) in FIG. 4 and detailed description thereof will be omitted.

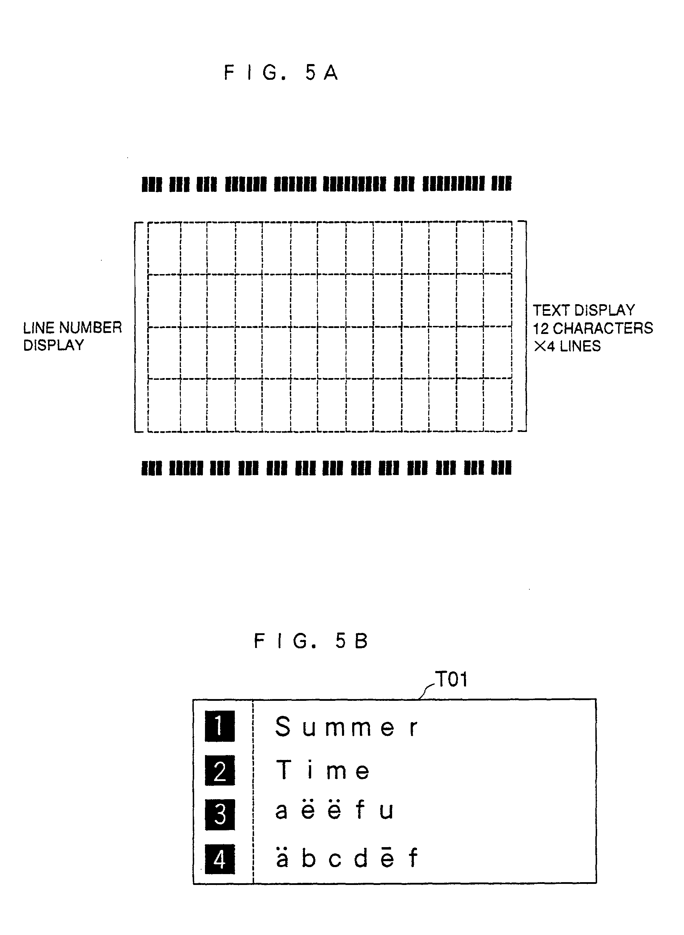

Referring to FIG. 4, when the present control process is started by turning on the power of the apparatus 1, first, at a step S1, initialization of settings of the system, such as restoring of saved control flags, is carried out to restore the tape printing apparatus 1 to a state before the power was turned off. Then, a display screen process is carried out at a step S2. As shown in FIG. 5A, the display screen 9a is capable of displaying four lines each formed by a line number and twelve characters at the maximum. FIG. 5B shows an example of the screen 9a on which the four line numbers and characters are displayed. Hereinafter, contents displayed on the display screen 9a are referred to as "screen Txx" (x represents a digit) and shown in figures with the same reference numeral.

Referring to FIG. 5B, if a character key is depressed during text entry to enter a letter "e" after a character string "Summer" is entered on a first line and a character string "Tim" on a second line, for instance, it is determined that a key entry has been made (Yes to S3), and it is determined at a step S4 that the key entry has not been made by a function key (No to S4), so that a character entry process is carried out at a step S5. In this character entry process (S5), the text data "e" is stored in the text memory 61, and font data corresponding thereto is read from the CG-ROM 70. The image data of the letter "e" in reverse video is stored at a location of display image data corresponding to the position of the cursor stored in the display image data memory 62.

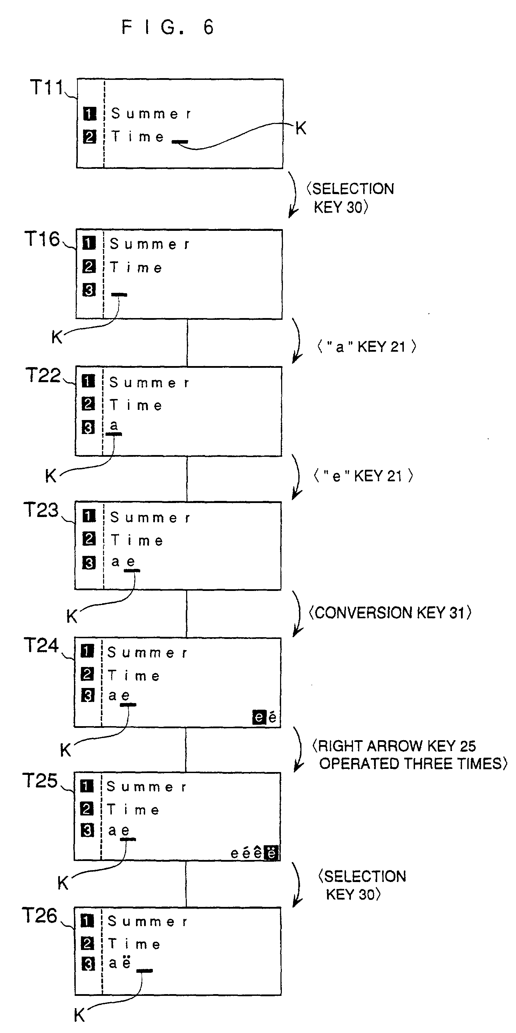

Then, when the selection key 30 is depressed to finally determine or fix the entry of the letter "e", it is determined that a key entry has been made (Yes to S3), that the key entry has been made by a function key (Yes to S4), and that the operated function key is not the print key 29 (No to S8), followed by finally determining or fixing the entry of the letter "e" at a step S11. In other words, the image data of the letter "e" in reverse video within the display image data memory 62 is changed into image data of the same in normal video. As a result, when the display screen process (S2) is carried out again, a screen T11 in FIG. 6 is displayed.

After the text data entry is carried out, whole text data can be checked through operating selected one(s) of the cursor-moving keys 25 to 28 (hereafter, these cursor-moving keys will be referred to as the right arrow key 25, the down arrow key 26, the up arrow key 27, and the left arrow key 28).

Then, when the print key 29 is depressed-in the state of the above screen T11 being displayed, it is determined that a key entry has been made (Yes to S3), that the key entry has been made by a function key (Yes to S4), and that the operated function key is the print key 29 (Yes to S8). Then, a print image-forming process is carried out at a step S9 to form print image data, and based on the print image data, printing is carried out at a step S10, followed by displaying the screen in a key entry wait state.

Next, a method of entering alphabetic letters of different languages will be described with reference to FIG. 6.

If the selection key 30 is depressed while the text entry screen is displayed (T11: hereafter "screen" before the reference numeral Txx will be omitted)), the user is prompted to enter a character on a third line of the text entry screen (T16). Now, in the case of entering e.g. a character string "aë" on the line, the alphabetic letter "a" is entered first by depressing a character key corresponding thereto and the entry of the letter "a" at a position designated by a cursor K (T22) is provisionally fixed, as shown in FIG. 6. Then, another character key is depressed to enter an English alphabetic letter "e" which is similar to the letter "ë", whereby the entry of the letter "e" at a position designated by the cursor K is provisionally fixed, and at the same time the entry of the letter "a" is finally fixed (T23).

Then, by depressing the conversion key 31, candidate letters of non-English languages which are similar to the letter "e" are read out as code data from the nonstandard alphabet memory area 52 of the ROM 50 and converted to font data by the CG-ROM 70 to be displayed in a row on the last line of the screen (T24).

Then, the right arrow key 25 or the left arrow key 28 is operated to select the desired letter "ë". The candidate letters are each displayed in reverse video one after another (T25) as the right arrow key 25 or the left arrow key 28 is depressed repeatedly. When the desired letter "ë" is displayed in reverse video, the selection key 30 is depressed to convert the provisionally entered letter "e" to the desired letter "ë", whereby the entry of "ë" is finally fixed (T26). Examples of candidate letters including "ë" are shown in FIG. 7.

To enter an uppercase letter of a non-English alphabet, by depressing a key corresponding e.g. to the English letter "e" while depressing the shift key 32 at the same time, an uppercase letter "E" is displayed. Then, similarly to the process of entering "ë", the conversion key 31 is depressed to display candidate uppercase letters on the screen, and a desired uppercase letter is selected out of the displayed candidate letters (see FIG. 7). Further, if a string of uppercase letters is required to be entered, a Caps Lock key or the like may be used to the enter uppercase letters in a locked state. Inversely, to enter lowercase letters in a state locked by the Caps Lock key, it is only required to depress a key corresponding thereto in a state of the shift key 32 being depressed. Conversion of a standard lowercase letter to a nonstandard one can be carried out through the character conversion process described above.

As described above, according to the tape printing apparatus 1, it is possible to enter a nonstandard alphabetic letter (e.g. "ë") easily and quickly by entering a standard alphabetic letter (e.g. "e") first and then converting it to the nonstandard alphabetic letter.

In general, in a cultural sphere such as Europe, where a plurality of languages are widely used, a character entry method and apparatus which is capable of dealing with as many different languages as possible suits users' needs or preferences. When a letter of the standard alphabet (e.g. the English alphabet) which can be directly entered (entered by activating a single key in a single operation) has one or more nonstandard alphabetic letters associated therewith (e.g. French alphabetic letters), the tape printing apparatus 1 stores all the nonstandard alphabetic letters, so that the standard alphabetic letter can be converted to a desired one of the nonstandard alphabetic letters by an instruction for the conversion.

Further, when there are a plurality of nonstandard alphabetic letters associated with a standard alphabetic letter, the printing apparatus 1 is capable of assigning priorities for conversion to the nonstandard alphabetic letters by means of a learning function of learning entry of nonstandard alphabetic letters.

Even though the alphabets of various languages are different in order or number of letters, most of the letters contained in them are common standard ones, and many of the nonstandard alphabetic letters are distinguished from the corresponding standard ones only in part of each letter shape.

The tape printing apparatus 1 stores alphabetic letters each having a mark (e.g. a diacritical mark such as "^{..}", "^{~}", or "⁻" (see FIG. 8A)) added thereto and special marks such as "°C" and "£" (see FIG. 8B) in the nonstandard alphabet memory area 52 of the ROM 50 as nonstandard alphabetic letters associated with the corresponding standard ones. This makes it possible to call nonstandard alphabetic letters associated with a standard one, as required, for selection of a desired one out of them, thereby facilitating conversion of the standard alphabetic letter to the desired nonstandard one.

Thus, the user can convert a standard alphabetic letter to any one of various marked alphabetic letters associated therewith simply by entering the standard alphabetic letter and then selecting a desired marked one by using conventional entry means (e.g. a keyboard) familiar to the user. This ease of character conversion increases operability of the apparatus.

According to the invention, a plurality of identical standard alphabetic letters positioned separately in sentences may be designated by adding a conversion mark (e.g. by character modification) to each of the letters and then all designated letters are converted to nonstandard alphabetic letters of the same kind in a single operation.

Further, the printing apparatus 1 displays a plurality of candidate letters including one or more nonstandard alphabetic letters associated with an entered standard one. Therefore, it is possible to select a desired nonstandard alphabetic letter out of the displayed candidates, whereby the desired nonstandard alphabetic letter can be entered quickly.

Next, a variation of the embodiment will be described. The variation of the character entry device is used in a printing apparatus which is capable of entering the Japanese language by a romaji (alphabet)-based character entry or a hirakana-based character entry. This type of tape printing apparatus is capable of entering standard or nonstandard alphabetic letters in a fashion mixed into a Japanese text.

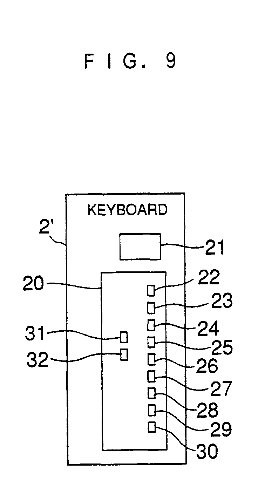

The tape printing apparatus 1 incorporating the variation of the character entry device, which is capable of entering the Japanese language, uses a keyboard 2 provided with an input mode selection key 23, as shown in FIG. 9.

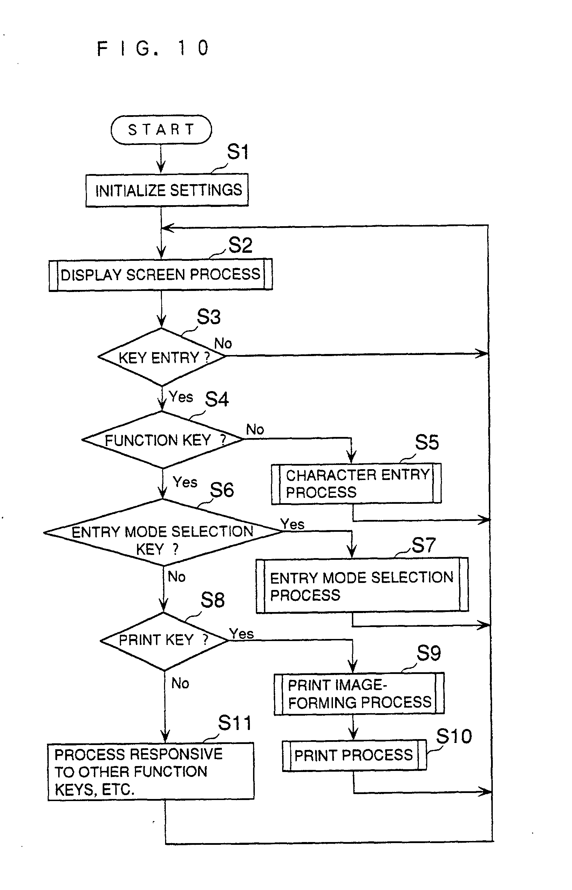

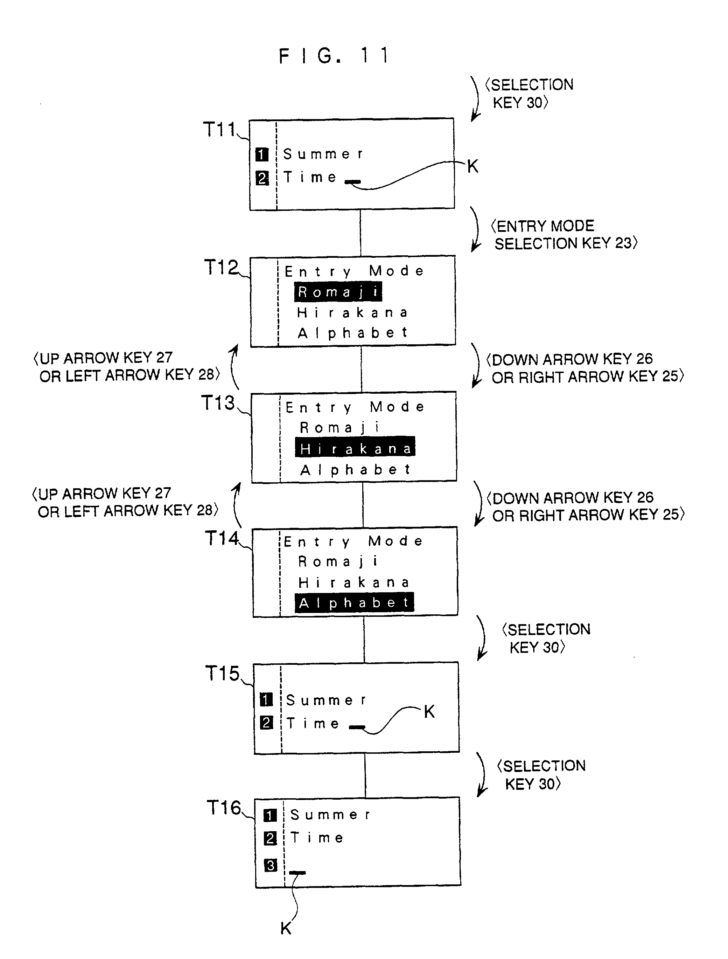

Now, a process for entry mode selection, which is a characterizing feature of the variation, will be described with reference to FIGS. 10 and 11. As shown in FIG. 10, when the entry mode selection key 23 is depressed in the state of the display screen process (S2) being carried out, it is determined that a key entry has been made (Yes to S3), that the key entry has been made by a function key (Yes to S4), and that the operated function key is the entry mode selection key 23 (Yes to S6). Then, at a step S7, an entry mode selection process is carried out.

As shown in FIG. 11, for instance, if the entry mode selection key 23 is depressed e.g. when the text entry screen (T11) is displayed, three predetermined mode options are displayed on the screen (T12) for enabling selection of a desired entry mode. The three predetermined mode options are (1) "Romaji" for Japanese character entry by utilizing a system of Romaji in which Japanese writing is expressed in alphabets, (2) "Hirakana" for Japanese character entry by using keys of the keyboard assigned to respective Japanese hirakana letters, and (3) "Alphabet" for the English alphabetic character entry, and a desired one of the three options can be displayed in reverse video by placing the cursor thereon through operating the down arrow key 26, the right arrow key 25, the up arrow key 27, or the left arrow key 28, for selection, and designated by depressing the selection key 30 (T12 to T14). The option (3) "Alphabet" is for designating an entry mode for entering the English language or any other European or Western language, embodying the characteristic feature of the present invention described in detail hereinabove.

In order to switch to the English entry mode from another entry mode, the entry mode selection key 23 is depressed to thereby display the three entry mode options on the screen as described above. In this state, the down arrow key 26, the right arrow key 25, the up arrow key 27, or the left arrow key 28 is operated as described above, to thereby display the entry mode option (3) "Alphabet" in reverse video (T12 to T14), and then the option (3) "Alphabet" is designated (T14) by depressing the selection key 30, followed by the text entry screen (T15) being displayed again. Thereafter, the alphabet entry can be carried out as described hereinabove.

It is also possible to provide a character conversion mode (e.g. a German language entry mode) in addition to a character entry mode for entering a standard alphabet (e.g. an English language entry mode). In this case, various manners of conversion are possible. For example, if the character entry mode is set and then the character conversion mode is designated before character entry is started, whenever a letter (e.g. an English letter) which can be converted is entered, at least one letter of a single target language for conversion (e.g. a German letter) is displayed as a candidate letter associated with the entered letter. On the other hand, if the conversion mode is designated after character entry, at least one letter of the target language associated with the letter already entered (but not finally determined for the entry thereof) is displayed as a candidate for conversion.

The former process of conversion is useful, for instance, in entering a German text by the use of a keyboard adapted to the English language, while the latter is useful in entering e.g. an English text containing German words or sentences. Both manners of the conversion can increase the operability and convenience.

Further, a diacritical mark (e.g. "^{..}") mode may be provided. In this case, when the diacritical mark mode is designated and then a standard alphabetic letter is entered, it is possible to display only candidates each having a diacritical mark added thereto and associated with the entered alphabetic letter. Therefore, a desired nonstandard alphabetic letter can be entered so long as its shape can be specified, even when a language containing the marked letter is not identified. This method can contribute to reduction of time and labor required in operation for character conversion.

Further, it is possible to enter a string or strings of standard alphabetic letters (e.g. "aeefu") and then designate a portion or range of the character string(s) (e.g. "ee" of the character string "aeefu") for conversion to nonstandard alphabetic letters (in this case, for instance, "aeefu" is converted to "aëëfu"). This method makes it possible to convert a plurality of identical standard alphabetic letters to corresponding identical nonstandard alphabetic letters each having an identical diacritical mark, in a single operation.

Also the tape printing apparatus 1 having the function of entering the Japanese language as explained above, may be modified as follows.

For example, the entry mode selection process may be carried out by depressing keys arranged on the keyboard for designating the above three entry modes respectively, instead of selecting one out of the three entry mode options displayed on the screen. Alternatively, three existing character keys may be used for entry mode selection as well, so as not to increase keys in number. In this case, the entry mode selection process is carried out by depressing a selected one of the three keys in a state of e.g. the shift key 32 being depressed. Further, instead of displaying the entry mode options directly on the screen, the names of the respective entry mode options may be printed outside the display screen 9a. In this case, indicators or the like are provided in areas on the screen adjacent to respective locations outside the display screen 9a where the names of the entry mode options are printed, so as to allow the user to confirm a selected entry mode option.

Although in the above description, for purposes of ease of understanding, the sequential operations each carried out by key entry are included in the normal control process as shown in FIGS. 4 and 10, this is not limitative, but it goes without saying that various interrupts by key entry or multitask operation for managing separate programs for respective operations may be executed for the control process.

Further, although the tape printing apparatus described above is a printer using a thermal head, this is not limitative, but the present invention may be applied to an ink jet printer. Moreover, the printing apparatus using a thermal head may be any one of various types of tape printing apparatus, such as a thermal transfer printer performing printing by subliming or melting ink by the heat of a thermal head. Still further, it goes without saying that as the tape fed from a tape cartridge, there may be employed not only a peel-off paper-backed tape but also a tape without using a peel-off paper, such as a transfer tape and an iron print transfer tape, which are commercially available.

It should be noted that the concept of the character entry process for entering alphabetic letters of the English and other Western languages, according to the present invention, can be applied to not only a tape printing apparatus, but also other electronic apparatuses (e.g. a small stamp-making apparatus) having the function of entering foreign languages in addition to that of entering a native language.

## Claims

1. A method of entering nonstandard alphabetic letters, comprising the steps of:
entering a standard alphabetic letter at a keyboard (2), a standard alphabetic letter being an alphabetic letter that can be entered by a single key of said keyboard (2) in a single operation;
calling a plurality of nonstandard alphabetic letters, which are characters that cannot be entered by a single key of said keyboard (2) in a single operation, said plurality of nonstandard alphabetic letters being associated with said entered standard alphabetic letter;
displaying said plurality of nonstandard alphabetic letters for selection; selecting a nonstandard alphabetic letter from said plurality of displayed nonstandard alphabetic letters; and
carrying out character conversion of said entered standard alphabetic letter to said selected nonstandard alphabetic letter;
**characterized by**
designating a plurality of entered standard alphabetic letters positioned separately in sentences, and collectively converting all designated standard alphabetic letters to nonstandard alphabetic letters of the same kind in a single operation.

2. A method according to claim 1, wherein said nonstandard alphabetic letters include alphabetic letters used for a language other than a language for which said standard alphabetic letters are used.

3. A method according to claim 1, wherein said nonstandard alphabetic letters include letters each composed of a standard alphabetic letter and a mark added to it.

4. A method according to claim 3, wherein said mark is a diacritical mark.

5. A method according to claim 1, wherein said plurality of nonstandard alphabetic letters are displayed by giving priority to the one selected last time.

6. A character entry device, comprising:
keyboard means (2) for entering standard alphabetic letters, a standard alphabetic letter being an alphabetic letter that can be entered by a single key of said keyboard (2) in a single operation;
storage means (60) for storing standard alphabetic letters, and nonstandard alphabetic letters, which are characters that cannot be entered by a single key of said keyboard (2) in a single operation;
calling means (31, 40) for calling a plurality of nonstandard alphabetic letters, said plurality of nonstandard alphabetic letters being associated with an entered standard alphabetic letter;
display means (9) for displaying said plurality of nonstandard alphabetic letters for selection;
selection means (25, 28, 30) for selecting a nonstandard alphabetic letter from said plurality of nonstandard alphabetic letters; and
conversion means (40) for carrying out character conversion of said entered standard alphabetic letter to said selected nonstandard alphabetic letter;
**characterized by**
designating means for designating a plurality of standard alphabetic letters positioned separately in sentences, wherein said conversion means (40) includes collective conversion means for collectively converting all designated standard alphabetic letters to nonstandard alphabetic letters of the same kind in a single operation.

7. A device according to claim 6, wherein said nonstandard alphabetic letters include alphabetic letters used for a language other than the language for which said standard alphabetic letters are used.

8. A device according to claim 6, wherein said nonstandard alphabetic letters include letters each composed of a standard alphabetic letter and a mark added to it.

9. A device according to claim 8, wherein said mark is a diacritical mark.

10. A device according to claim 6, wherein said display means (9) displays said plurality of nonstandard alphabetic letters by giving priority to the one selected last time.

## Patentansprüche

1. Verfahren zur Eingabe von Nichtstandard-Alphabetbuchstaben, enthaltend die Schritte:
Eingeben eines Standard-Alphabetbuchstabens mit einer Tastatur (2), wobei ein Standard-Alphabetbuchstabe ein Alphabetbuchstabe ist, der mit einer einzelnen Taste der Tastatur (2) in einem einzigen Bedienungsvorgang eingegeben werden kann;
Aufrufen einer Vielzahl von Nichtstandard-Alphabetbuchstaben, welche Zeichen sind, die nicht durch eine einzelne Taste der Tastatur (2) in einem einzigen Bedienungsvorgang eingegeben werden können, welche Vielzahl von Nichtstandard-Alphabetbuchstaben dem eingegebenen Standard-Alphabetbuchstaben zugehörig ist;
Anzeigen der Vielzahl von Nichtstandard-Alphabetbuchstaben zur Auswahl;
Auswählen eines Nichtstandard-Alphabetbuchstabens aus der Vielzahl von angezeigten Nichtstandard-Alphabetbuchstaben; und
Ausführen der Zeichenumwandlung des eingegebenen Standard-Alphabetbuchstabens in den ausgewählten Nichtstandard-Alphabetbuchstaben;
**gekennzeichnet durch**
Bezeichnen einer Vielzahl eingegebener Standard-Alphabetbuchstaben, die in Sätzen separat positioniert sind, und kollektives Umwandeln aller bezeichneten Standard-Alphabetbuchstaben in Nichtstandard-Alphabetbuchstaben der gleichen Art in einem einzigen Bedienungsvorgang.

2. Verfahren nach Anspruch 1, bei welchem die Nichtstandard-Alphabetbuchstaben Alphabetbuchstaben enthalten, die für eine andere Sprache als eine Sprache verwendet werden, für die die Standard-Alphabetbuchstaben verwendet werden.

3. Verfahren nach Anspruch 1, bei welchem die Nichtstandard-Alphabetbuchstaben Buchstaben enthalten, die jeweils aus einem Standard-Alphabetbuchstaben und einem zu diesem hinzugefügten Zeichen zusammengesetzt sind.

4. Verfahren nach Anspruch 3, bei welchem das Zeichen ein diakritisches Zeichen ist.

5. Verfahren nach Anspruch 1, bei welchem die Vielzahl der Nichtstandard-Alphabetbuchstaben angezeigt wird, wobei der das letzte Mal ausgewählte die Priorität erhält.

6. Vorrichtung zur Zeicheneingabe, enthaltend:
eine Tastatureinrichtung (2) zum Eingegeben von Standard-Alphabetbuchstaben, wobei ein Standard-Alphabetbuchstabe ein Alphabetbuchstabe ist, der mit einer einzelnen Taste der Tastatur (2) in einem einzigen Bedienungsvorgang eingegeben werden kann;
eine Speichereinrichtung (60) zum Speichern von Standard-Alphabetbuchstaben und Nichtstandard-Alphabetbuchstaben, welche Zeichen sind, die nicht durch eine einzelne Taste der Tastatur (2) in einem einzigen Bedienungsvorgang eingegeben werden können;
eine Aufrufeinrichtung (31, 40) zum Aufrufen einer Vielzahl von Nichtstandard-Alphabetbuchstaben, welche Vielzahl von Nichtstandard-Alphabetbuchstaben einem eingegebenen Standard-Alphabetbuchstaben zugehörig ist;
eine Anzeigeeinrichtung (9) zum Anzeigen der Vielzahl von Nichtstandard-Alphabetbuchstaben zur Auswahl;
eine Auswahleinrichtung (25, 28, 30) zum Auswählen eines Nichtstandard-Alphabetbuchstabens aus der Vielzahl von Nichtstandard-Alphabetbuchstaben; und
eine Umwandlungseinrichtung (40) zur Durchführung einer Zeichenumwandlung des eingegebenen Standard-Alphabetbuchstabens in den ausgewählten Nichtstandard-Alphabetbuchstaben;
**gekennzeichnet durch**
eine Bezeichnungseinrichtung zum Bezeichnen einer Vielzahl eingegebener Standard-Alphabetbuchstaben, die in Sätzen separat positioniert sind, wobei die Umwandlungseinrichtung (40) eine Kollektivumwandlungseinrichtung enthält, um alle bezeichneten Standard-Alphabetbuchstaben in einem einzigen Bedienungsvorgang in Nichtstandard-Alphabetbuchstaben der gleichen Art kollektiv umzuwandeln.

7. Vorrichtung nach Anspruch 6, bei welcher die Nichtstandard-Alphabetbuchstaben Alphabetbuchstaben enthalten, die für eine andere Sprache als eine Sprache verwendet werden, für die die Standard-Alphabetbuchstaben verwendet werden.

8. Vorrichtung nach Anspruch 6, bei welcher die Nichtstandard-Alphabetbuchstaben Buchstaben enthalten, die jeweils aus einem Standard-Alphabetbuchstaben und einem zu diesem hinzugefügten Zeichen zusammengesetzt sind.

9. Vorrichtung nach Anspruch 6, bei welcher das Zeichen ein diakritisches Zeichen ist.

10. Vorrichtung nach Anspruch 6, bei welcher die Vielzahl der Nichtstandard-Alphabetbuchstaben angezeigt wird, indem der das letzte Mal ausgewählte die Priorität erhält.

## Revendications

1. Procédé pour l'entrée de lettres alphabétiques non standard, comprenant les étapes consistant à:
entrer une lettre alphabétique standard sur un clavier (2), une lettre alphabétique standard étant une lettre alphabétique qui peut être entrée au moyen d'une seule touche du clavier (2) en une seule opération ;
appeler une pluralité de lettres alphabétiques non standard qui sont des caractères ne pouvant pas être entrés au moyen d'une touche unique du clavier (2) en une seule opération, la pluralité de lettres alphabétiques non standard étant associée à la lettre alphabétique standard entrée ;
afficher la pluralité de lettres alphabétiques non standard pour une sélection ;
sélectionner une lettre alphabétique non standard parmi la pluralité de lettres alphabétiques non standard affichées ; et
effectuer une conversion de caractère de la lettre alphabétique standard entrée en la lettre alphabétique non standard sélectionnée ;
**caractérisé par** le fait de
désigner une pluralité de lettres alphabétiques standard entrées qui sont positionnées de façon séparée dans des phrases, et convertir collectivement toutes les lettres alphabétiques standard désignées en des lettres alphabétiques non standard du même type en une seule opération.

2. Procédé suivant la revendication 1, dans lequel les lettres alphabétiques non standard comprennent des lettres alphabétiques utilisées pour une langue autre qu'une langue pour laquelle lesdites lettres alphabétiques standard sont utilisées.

3. Procédé suivant la revendication 1, dans lequel les lettres alphabétiques non standard comprennent des lettres qui sont chacune composées d'une lettre alphabétique standard et d'un signe qui lui est ajouté.

4. Procédé suivant la revendication 3, dans lequel le signe est un signe diacritique.

5. Procédé suivant la revendication 1, dans lequel la pluralité de lettres alphabétiques non standard est affichée de façon que celles qui ont été sélectionnées en dernier lieu.

6. Dispositif d'entrée de caractères, comprenant :
un moyen à clavier (2) pour entrer des lettres alphabétiques standard, une lettre alphabétique standard étant une lettre alphabétique qui peut être entrée au moyen d'une touche unique du clavier (2) en une seule opération ;
un moyen de stockage (60) pour stocker des lettres alphabétiques standard et des lettres alphabétiques non standard qui sont des caractères ne pouvant pas être entrés au moyen d'une touche unique du clavier (2) en une seule opération ;
un moyen d'appel (31, 40) pour appeler une pluralité de lettres alphabétiques non standard, la pluralité de lettres alphabétiques non standard étant associée à une lettre alphabétique standard entrée ;
un moyen d'affichage (9) pour afficher la pluralité de lettres alphabétiques non standard pour une sélection ;
un moyen de sélection (25, 28, 30) pour sélectionner une lettre alphabétique non standard parmi la pluralité de lettres alphabétiques non standard ; et
un moyen de conversion (40) pour effectuer une conversion de caractère de la lettre alphabétique standard entrée en la lettre alphabétique non standard sélectionnée ;
**caractérisé par** :
un moyen de désignation destiné à désigner une pluralité de lettres alphabétiques standard positionnées de façon séparée dans des phrases, le moyen de conversion (40) comportant un moyen de conversion collective pour convertir collectivement toutes les lettres alphabétiques standard désignées en des lettres alphabétiques non standard du même type en une seule opération.

7. Dispositif suivant la revendication 6, dans lequel les lettres alphabétiques non standard comprennent des lettres alphabétiques utilisées pour une langue autre que la langue pour laquelle les lettres alphabétiques standard sont utilisées.

8. Dispositif suivant la revendication 6, dans lequel les lettres alphabétiques non standard comprennent des lettres chacune composées d'une lettre alphabétique standard et d'un signe qui lui est ajouté.

9. Dispositif suivant la revendication 8, dans lequel le signe est un signe diacritique.

10. Dispositif suivant la revendication 6, dans lequel le moyen d'affichage (9) affiche la pluralité de lettres alphabétiques non standard de façon que celles qui ont été sélectionnées en dernier lieu soient prioritaires.
